# FASCICULE DE BREVET EUROPEEN

(11) **EP 3 258 023 B1**
(45) Date de publication et mention de la délivrance du brevet: **26.09.2018**
(21) Numéro de dépôt: 17170320.0
(22) Date de dépôt: 10.05.2017
(51) Int. Cl.: B32B 37/12, E04B 1/62, B32B 33/00

(54) **MEMBRANE ADHÉSIVE BARRIÈRE CONTRE L'AIR ET L'HUMIDITÉ ET PERMÉABLE À LA VAPEUR D'EAU**
KLEBBARE SPERRMEMBRAN ALS SCHUTZ GEGEN LUFT UND FEUCHTIGKEIT, DIE DURCHLÄSSIG FÜR WASSERDAMPF IST
ADHESIVE MEMBRANE FORMING A BARRIER TO AIR AND MOISTURE, WHICH IS PERVIOUS TO WATER VAPOUR

(30) Priorité: 14.06.2016 FR 1655516
(43) Date de publication de la demande: 20.12.2017
(73) Titulaire: ADHEX TECHNOLOGIES, 21300 Chenôve (FR)
(72) Inventeur: DURAND, Hervé, 21000 Dijon (FR); LESIRE, Charles, 21000 Dijon (FR); DE LA BROSSE, Roland, 21000 Dijon (FR)
(74) Mandataire: Gevers & Orès

(56) Documents cités:
- US-A1- 2015 037 548
- US-B2- 6 901 712

## Description

La présente invention se rapporte à une membrane adhésive barrière contre l'air et l'humidité et perméable à la vapeur d'eau, destinée à des surfaces de bâtiments.

Dans le domaine de la construction de bâtiments, il est bien connu d'utiliser des membranes adhésives barrière contre l'air et l'humidité et perméable à la vapeur d'eau, lesdites membranes étant interposées entres les couches de la paroi structurelle du bâtiment afin d'éviter les problèmes dus à l'accumulation de l'humidité.

Ces membranes comprennent généralement une membrane perméable à la vapeur d'eau revêtue d'un côté par un adhésif. Ces membranes forment également des barrières contre l'air et l'humidité, la structure microporeuse des membranes permettant le passage de vapeur d'eau tout en empêchant le passage de l'air. En effet, la structure moléculaire de la vapeur d'eau permet de passer à travers des pores plus petits que l'oxygène et l'azote notamment.

Lesdites membranes sont fixées sur les parois du bâtiment au moyen de la couche d'adhésif, usuellement un adhésif sensible à la pression avec un chevauchement de deux membranes adjacentes pour assurer l'étanchéité.

De telles membranes sont notamment décrites dans les documents US 5,895,301 et US 6,901,712.

Le document US 5,895,301 décrit un stratifié barrière déchirable à la main destiné à obturer un interstice ou un joint dans une construction comprenant un mat de renfort ayant une première résistance à la traction, une bande cellulosique flexible unie au mat de renfort, pouvant être pénétrée par les liquides dans son état non traité, et ayant une deuxième résistance à la traction qui est inférieure à la première résistance à la traction, une résine polymérique résistant à l'eau appliquée sur la bande pour la rendre résistante à l'eau liquide tout en permettant à la vapeur d'eau de la traverser. Le mat de renfort contient des fibres de polyester, de rayonne, de verre ou une combinaison de ces fibres et la résine polymérique s'infiltre dans la bande pour réduire la dimension des pores de celle-ci pour empêcher pratiquement le passage de l'eau liquide.

Ce type de membrane présente l'inconvénient d'être onéreux à produire et de ne pas procurer une parfaite étanchéité à l'air latéralement.

Le document US 6,901,712 décrit quant à lui une membrane adhésive barrière contre l'air et l'humidité et perméable à la vapeur d'eau destinée à des surfaces structurales de bâtiments et qui laisse passer la vapeur d'eau. Ladite membrane est constituée d'une feuille perméable à la vapeur d'eau, sur une surface de laquelle est appliqué un film adhésif discontinu.

Bien que ce type de membrane présente l'avantage de procurer une bonne étanchéité à l'air latéralement, il présente néanmoins l'inconvénient d'être onéreux à produire.

L'un des buts de l'invention est donc de remédier à ces inconvénients en proposant une membrane adhésive barrière contre l'air et l'humidité et perméable à la vapeur d'eau, destinée à des surfaces de bâtiments, de conception simple et peu onéreuse, procurant une bonne adhérence sur les parois du bâtiment et une bonne étanchéité à l'air latéralement.

A cet effet et conformément à l'invention, il est proposé une membrane adhésive barrière contre l'air et l'humidité et perméable à la vapeur d'eau, destinée à des surfaces de bâtiments, comportant au moins un film perméable à la vapeur d'eau et une couche d'un adhésif sensible à la pression, ladite couche d'adhésif étant déposée sur l'une des faces dite face inférieure du film ; ladite membrane est remarquable en ce qu'elle comporte une première couche d'un adhésif sensible à la pression déposée sur la totalité de la face inférieure du film sur une épaisseur inférieure ou égale à 50 µm et une seconde couche d'un adhésif sensible à la pression déposée sur ladite première couche pour recouvrir la première couche sur 2 à 99% de la surface de la première couche sur une épaisseur comprise entre 50 µm et 2 mm.

De préférence, le ratio entre la perméabilité de ladite membrane et la perméabilité du film perméable à la vapeur d'eau est compris entre 0,70 et 0,99 et, de préférence, compris entre 0,8 et 0,9, ladite perméabilité étant mesurée selon la norme ASTM E96 méthode A.

Ladite première couche d'adhésif sensible à la pression est obtenue dans une colle thermofusible.

Par ailleurs, ladite seconde couche d'adhésif sensible à la pression est obtenue dans une colle thermofusible, ladite colle thermofusible pouvant être identique ou différente de la colle thermofusible de la première couche.

Selon une variante d'exécution, la seconde couche d'adhésif sensible à la pression est déposée sous forme de bandes horizontales et/ou verticales et/ou diagonales.

Selon une autre variante d'exécution préférée, la seconde couche d'adhésif sensible à la pression est déposée sous forme de cordons horizontaux et/ou verticaux et/ou diagonaux.

De préférence, la seconde couche d'adhésif sensible à la pression est déposée sous forme de cordons diagonaux pour former des croisillons.

De plus, le film comporte au moins un film microporeux ou un composite de celui-ci et/ou au moins un film polymère orienté ou un composite de celui-ci et/ou au moins un film de polyoléfine ou un composite de celui-ci et/ou au moins un film de polypropylène ou un composite de celui-ci et/ou au moins un film en polyoléfine non tissée ou un composite de celui-ci.

Accessoirement, la membrane suivant l'invention comporte un film protecteur coiffant la seconde couche d'adhésif sensible à la pression.

D'autres avantages et caractéristiques ressortiront mieux de la description qui va suivre, d'une unique variante d'exécution, donnée à titre d'exemple non limitatif, de la membrane adhésive barrière contre l'air et l'humidité et perméable à la vapeur d'eau suivant l'invention, à partir des dessins annexés sur lesquels :
- la figure 1 est une vue en perspective d'une membrane adhésive barrière contre l'air et l'humidité et perméable à la vapeur d'eau conforme à l'invention,
- la figure 2 est une vue en élévation d'une membrane adhésive barrière contre l'air et l'humidité et perméable à la vapeur d'eau conforme à l'invention,
- la figure 3 est une vue de dessous d'une membrane adhésive barrière contre l'air et l'humidité et perméable à la vapeur d'eau conforme à l'invention.

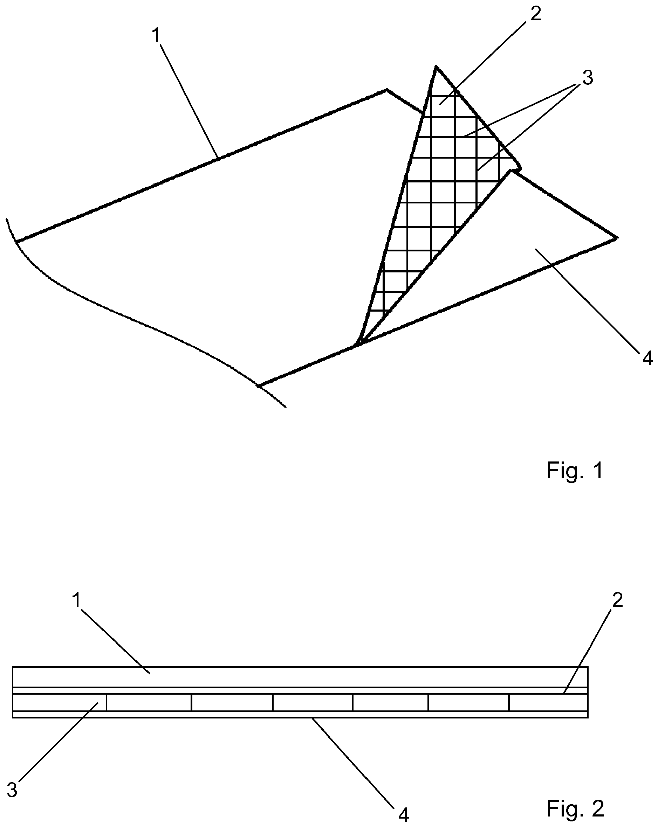

En référence aux figures 1 à 3, la membrane adhésive barrière contre l'air et l'humidité et perméable à la vapeur d'eau, destinée à des surfaces de bâtiments, suivant l'invention, est constituée d'un film perméable à la vapeur d'eau 1, d'une première couche 2 d'un adhésif sensible à la pression déposée sur la totalité de la face inférieure du film 1 sur une épaisseur inférieure ou égale à 50 µm, avec un grammage compris entre 10 et 80 g/m², et de préférence un grammage compris entre 10 et 20 g/m², et d'une seconde couche 3 d'un adhésif sensible à la pression déposée sur ladite première couche 2 pour recouvrir la première couche sur 2 à 99% de la surface de la première couche sur une épaisseur comprise entre 50 µm et 2 mm, avec un grammage compris entre 60 et 180 g/m², et de préférence un grammage compris entre 100 et 140 g/m².

Ledit film 1 peut consister dans tout film barrière bien connu de l'homme du métier et peut comporter, par exemple, au moins un film microporeux ou un composite de celui-ci et/ou au moins un film polymère orienté ou un composite de celui-ci et/ou au moins un film de polyoléfine ou un composite de celui-ci et/ou au moins un film de polypropylène ou un composite de celui-ci et/ou au moins un film en polyoléfine non tissée ou un composite de celui-ci.

Par ailleurs, ladite première couche 2 d'adhésif sensible à la pression est obtenue dans une colle thermofusible et ladite seconde couche 3 d'adhésif sensible à la pression est également obtenue dans une colle thermofusible, ladite colle thermofusible pouvant être identique ou différente de la colle thermofusible de la première couche.

Toutefois, il est bien évident que l'adhésif sensible à la pression des première 2 et seconde 3 couches pourra consister dans tout adhésif sensible à la pression bien connu de l'homme du métier. De tels adhésifs pourront consister, par exemple, dans des adhésifs acrylates sans pour autant sortir du cadre de l'invention.

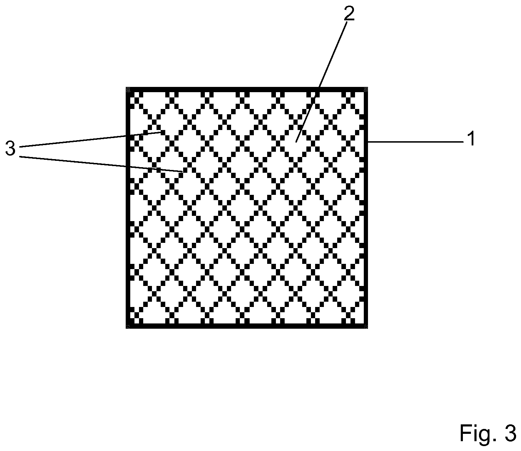

De préférence, en référence aux figures 1 et 3, la seconde couche 3 d'adhésif sensible à la pression est déposée sous forme de cordons diagonaux pour former des croisillons. On notera que les croisillons de la seconde couche 3 d'adhésif sensible à la pression procure une bonne étanchéité à l'air latéralement et que la première couche 2 d'adhésif sensible à la pression améliore la tenue de la membrane en permettant une adhérence avec la paroi sur laquelle est fixée la membrane entre les cordons de la seconde couche 3.

De plus, on observera que la faible épaisseur de la première couche 2 d'adhésif sensible à la pression ne procure qu'une faible diminution de la perméabilité du film 1 qui ne nuit pas à la performance de la membrane. De préférence, les adhésifs sensibles à la pression, leurs grammages par unité de surface et l'épaisseur des couches d'adhésif sont choisis de telle manière que le ratio entre la perméabilité de la membrane suivant l'invention et la perméabilité du film (sans couches adhésives) soit compris entre 0,70 et 0,99 et, de préférence, compris entre 0,80 et 0,90.

### Exemple 1 :

Une membrane adhésive barrière contre l'air et l'humidité suivant l'invention a été réalisée à partir d'un film perméable à la vapeur d'eau 1 constitué d'un film non tissé tricouche commercialisée sous la référence Stratec® Il par la société SOPREMA, d'une première couche 2 d'un adhésif sensible à la pression de type hotmelt commercialisé sous la référence AC Resin 260UV par la société BASF déposée sur la totalité de la face inférieure du film 1 sur une épaisseur inférieure à 50 µm, avec un grammage de 14 g/m² et d'une seconde couche 3 d'un adhésif sensible à la pression commercialisé sous la référence TLH 2901 par la société Bostik déposée sur ladite première couche 2 sous forme de croisillons pour recouvrir la première couche sur 18 % de la surface de la première couche sur une épaisseur supérieure à 50 µm et avec un grammage de 102 g/m².

Le film non tissé tricouche commercialisée sous la référence Stratec® Il par la société SOPREMA et formant le film perméable à la vapeur d'eau 1 présente une perméabilité de 48.5 conformément à la norme ASTM E96.

### Exemple 2 :

Une membrane adhésive barrière contre l'air et l'humidité suivant l'invention a été réalisée à partir d'un film perméable à la vapeur d'eau 1 constitué d'un film non tissé tricouche commercialisée sous la référence Stratec® Il par la société SOPREMA, d'une première couche 2 d'un adhésif sensible à la pression de type hotmelt commercialisé sous la référence AC Resin 260UV par la société BASF déposée sur la totalité de la face inférieure du film 1 sur une épaisseur inférieure à 50 µm, avec un grammage de 14 g/m² et d'une seconde couche 3 d'un adhésif sensible à la pression commercialisé sous la référence TLH 2901 par la société Bostik déposée sur ladite première couche 2 sous forme de croisillons pour recouvrir la première couche sur 21 % de la surface de la première couche sur une épaisseur supérieure à 50 µm et avec un grammage de 140 g/m².

Le tableau 1 ci-dessous illustre les résultats de respirabilité pour les exemples 1 et 2 comparés à la respirabilité du film non tissé tricouche commercialisée sous la référence Stratec® Il par la société SOPREMA. On notera que la respirabilité est mesurée selon la norme ASTM E96 méthode A.

| | 1ere couche adhésive-grammage (g/m²) | 2nde couche adhésive-grammage (g/m²) | Respirabilité Perm ASTM E96 |
|---|---|---|---|
| Stratec 2 | - | - | 48.5 |
| Exemple 1 | 14 | 102 | 42.6 |
| Exemple 2 | 14 | 140 | 39.6 |

Comme on peut le constater dans le tableau 1, le faible grammage, i.e. la faible épaisseur, de la première couche 2 d'adhésif sensible à la pression ne procure qu'une faible diminution de la perméabilité du film 1, sans couches adhésives, qui ne nuit pas à la performance de la membrane. Ainsi, il apparaît que la diminution de la perméabilité n'est que 18% pour l'exemple 1 et que de 21% pour l'exemple 2 par rapport à la perméabilité du film 1 sans couches adhésives. Le ratio entre la perméabilité de la membrane suivant l'invention et la perméabilité du film (sans couches adhésives) est de 0,88 pour l'exemple 1 et de 0,82 pour l'exemple 2.

Le tableau 2 ci-dessous est un comparatif de la respirabilité des membranes commercialisées par la société Henry sous la référence BlueSkin VP100, et correspondant au brevet américain US 6,901,712, avec les exemples 1 et 2 décrits précédemment.

| | 1ere couche adhésive-grammage (g/m²) | 2nde couche adhésive-grammage (g/m²) | Respirabilité Perm ASTM E96 |
|---|---|---|---|
| BlueSkin VP100 | 136 | - | 33 |
| Exemple 1 | 14 | 102 | 42.6 |
| Exemple 2 | 14 | 140 | 39.6 |

Il apparaît clairement que la respirabilité des exemples 1 et 2 de la membrane suivant l'invention est nettement supérieure à celle des produits de l'art antérieur.

Selon une variante d'exécution, la seconde couche d'adhésif sensible à la pression pourra être déposée sous forme de bandes horizontales et/ou verticales et/ou diagonales ou bien encore sous forme de cordons horizontaux et/ou verticaux et/ou diagonaux, lesdites bandes et/ou lesdits cordons pouvant être rectilignes ou sinueux, pour former des motifs réguliers ou irréguliers, sans pour autant sortir du cadre de l'invention.

Accessoirement, en référence aux figures 1 et 2, la membrane suivant l'invention comporte un film protecteur 4 coiffant la seconde couche 3 d'adhésif sensible à la pression. Ledit film protecteur 4 consiste dans tout film protecteur bien connu de l'homme du métier tel qu'un film comportant une surface siliconée par exemple.

Il est bien entendu que la présente invention n'est en aucune façon limitée aux formes de réalisations décrites ci-dessus et que bien des modifications peuvent y être apportées sans sortir du cadre des revendications annexées.

## Revendications

1. Membrane adhésive barrière contre l'air et l'humidité et perméable à la vapeur d'eau, destinée à des surfaces de bâtiments, comportant au moins un film (1) perméable à la vapeur d'eau et une couche d'un adhésif sensible à la pression, ladite couche d'adhésif étant déposée sur l'une des faces dite face inférieure du film, ***caractérisée* en ce qu'**elle comporte une première couche (2) d'un adhésif sensible à la pression déposée sur la totalité de la face inférieure du film (1) sur une épaisseur inférieure ou égale à 50 µm et une seconde couche (3) d'un adhésif sensible à la pression déposée sur ladite première couche (2) pour recouvrir la première couche (2) sur 2 à 99% de la surface de la première couche (2) sur une épaisseur comprise entre 50 µm et 2 mm.

2. Membrane suivant la revendication 1 ***caractérisée* en ce que** le ratio entre la perméabilité de ladite membrane et la perméabilité du film (1) perméable à la vapeur d'eau est compris entre 0,70 et 0,99 et, de préférence, compris entre 0,8 et 0,9, ladite perméabilité étant mesurée selon la norme ASTM E96 méthode A.

3. Membrane suivant l'une quelconque des revendications 1 ou 2 ***caractérisée* en ce que** la première couche (2) d'adhésif sensible à la pression est obtenue dans une colle thermofusible.

4. Membrane suivant l'une quelconque des revendications 1 à 3 ***caractérisée* en ce que** la seconde couche (3) d'adhésif sensible à la pression est obtenue dans une colle thermofusible.

5. Membrane suivant l'une quelconque des revendications 1 à 4 ***caractérisée* en ce que** la seconde couche (3) d'adhésif sensible à la pression est déposée sous forme de bandes horizontales et/ou verticales et/ou diagonales.

6. Membrane suivant l'une quelconque des revendications 1 à 4 ***caractérisée* en ce que** la seconde couche (3) d'adhésif sensible à la pression est déposée sous forme de cordons horizontaux et/ou verticaux et/ou diagonaux.

7. Membrane suivant la revendication 6 ***caractérisée* en ce que** la seconde couche (3) d'adhésif sensible à la pression est déposée sous forme de cordons diagonaux pour former des croisillons.

8. Membrane suivant l'une quelconque des revendications 1 à 7 ***caractérisée* en ce que** le film (1) comporte au moins un film microporeux ou un composite de celui-ci.

9. Membrane suivant l'une quelconque des revendications 1 à 8 ***caractérisée* en ce que** le film (1) comporte au moins un film polymère orienté ou un composite de celui-ci.

10. Membrane suivant l'une quelconque des revendications 1 à 9 ***caractérisée* en ce que** le film (1) comporte au moins un film de polyoléfine ou un composite de celui-ci.

11. Membrane suivant l'une quelconque des revendications 1 à 10 ***caractérisée* en ce que** le film (1) comporte au moins un film de polypropylène ou un composite de celui-ci.

12. Membrane suivant l'une quelconque des revendications 1 à 11 ***caractérisée* en ce que** le film (1) comporte au moins un film en polyoléfine non tissée ou un composite de celui-ci.

13. Membrane suivant l'une quelconque des revendications 1 à 12 ***caractérisée* en ce qu'**elle comporte un film protecteur (4) coiffant la seconde couche d'adhésif sensible à la pression.

## Patentansprüche

1. Klebbare Sperrmembran als Schutz gegen Luft und Feuchtigkeit, die für Wasserdampf durchlässig ist, die für Gebäudeflächen bestimmt ist, mindestens einen für Wasserdampf durchlässigen Film (1) und eine Schicht eines druckempfindlichen Klebstoffs aufweisend, wobei die Klebstoffschicht auf einer der Seiten, die als Unterseite des Films bezeichnet wird, aufgebracht ist, **dadurch *gekennzeichnet,* dass** sie eine erste Schicht (2) eines druckempfindlichen Klebstoffs aufweist, die auf der Gesamtheit der Unterseite des Films (1) auf einer Dicke von kleiner als oder gleich 50 µm aufgebracht ist, und eine zweite Schicht (3) eines druckempfindlichen Klebstoffs, die auf der ersten Schicht (2) aufgebracht ist, um die erste Schicht (2) auf 2 bis 99 % der Fläche der ersten Schicht (2) auf einer Dicke im Bereich zwischen 50 µm und 2 mm zu bedecken.

2. Membran nach Anspruch 1, **dadurch *gekennzeichnet,* dass** das Verhältnis zwischen der Durchlässigkeit der Membran und der Durchlässigkeit des für Wasserdampf durchlässigen Films (1) im Bereich zwischen 0,70 und 0,99, und vorzugsweise im Bereich zwischen 0,8 und 0,9 beträgt, wobei die Durchlässigkeit nach der Norm ASTM E96 Methode A gemessen wird.

3. Membran nach einem der Ansprüche 1 oder 2, **dadurch *gekennzeichnet,* dass** die erste druckempfindliche Klebstoffschicht (2) in einem Schmelzklebstoff erhalten wird.

4. Membran nach einem der Ansprüche 1 bis 3, **dadurch *gekennzeichnet,* dass** die zweite druckempfindliche Klebstoffschicht (3) in einem Schmelzklebstoff erhalten wird.

5. Membran nach einem der Ansprüche 1 bis 4, **dadurch *gekennzeichnet,* dass** die zweite druckempfindliche Klebstoffschicht (3) in Form von horizontalen und/oder vertikalen und/oder diagonalen Streifen aufgebracht wird.

6. Membran nach einem der Ansprüche 1 bis 4, **dadurch *gekennzeichnet,* dass** die zweite druckempfindliche Klebstoffschicht (3) in Form von horizontalen und/oder vertikalen und/oder diagonalen Raupen aufgebracht wird.

7. Membran nach Anspruch 6, **dadurch *gekennzeichnet,* dass** die zweite druckempfindliche Klebstoffschicht (3) in Form von diagonalen Raupen aufgebracht wird, um Rauten zu bilden.

8. Membran nach einem der Ansprüche 1 bis 7, **dadurch *gekennzeichnet,* dass** der Film (1) mindestens einen mikroporösen Film oder einen Verbund desselben aufweist.

9. Membran nach einem der Ansprüche 1 bis 8, **dadurch *gekennzeichnet,* dass** der Film (1) mindestens einen gerichteten Polymerfilm oder einen Verbund desselben aufweist.

10. Membran nach einem der Ansprüche 1 bis 9, **dadurch *gekennzeichnet,* dass** der Film (1) mindestens einen Polyolefinfilm oder einen Verbund desselben aufweist.

11. Membran nach einem der Ansprüche 1 bis 10, **dadurch *gekennzeichnet,* dass** der Film (1) mindestens einen Polypropylenfilm oder einen Verbund desselben aufweist.

12. Membran nach einem der Ansprüche 1 bis 11, **dadurch *gekennzeichnet,* dass** der Film (1) mindestens einen Film aus Polyolefinvlies oder einen Verbund desselben aufweist.

13. Membran nach einem der Ansprüche 1 bis 12, **dadurch *gekennzeichnet,* dass** sie einen Schutzfilm (4) aufweist, der die zweite druckempfindliche Klebstoffschicht überdeckt.

## Claims

1. An adhesive membrane which is airproof and moisture-proof and permeable to water vapor, intended for surfaces of buildings, including at least one film (1) permeable to water vapor and a layer of a pressure-sensitive adhesive, said adhesive layer being deposited on one of the faces a so-called lower face of the film, ***characterized* in that** it includes a first layer (2) of a pressure-sensitive adhesive deposited on the totality of the lower face of the film (1) over a thickness of less than or equal to 50 µm and a second layer (3) of a pressure-sensitive adhesive deposited on said first layer (2) for covering the first layer (2) over 2 to 99% of the surface of the first layer (2) over a thickness comprised between 50 µm and 2 mm.

2. The membrane according to claim 1 ***characterized* in that** the ratio between the permeability of said membrane and the permeability of the film (1) permeable to water vapor is comprised between 0.70 and 0.99 and preferably, comprised between 0.8 and 0.9, said permeability being measured according to the ASTM E96 standard method A.

3. The membrane according to any of claims 1 or 2 ***characterized* in that** first layer (2) of a pressure-sensitive adhesive is obtained in a hot melt adhesive.

4. The membrane according to any of claims 1 to 3 ***characterized* in that** the second layer (3) of a pressure-sensitive adhesive is obtained in a hot melt adhesive.

5. The membrane according to any of claims 1 to 4 ***characterized* in that** the second layer (3) of a pressure-sensitive adhesive is deposited as horizontal and/or vertical and/or diagonal strips.

6. The membrane according to any of claims 1 to 4 ***characterized* in that** the second layer (3) of a pressure-sensitive adhesive is deposited as horizontal and/or vertical and/or diagonal cords.

7. The membrane according to claim 6 ***characterized* in that** the second layer (3) of a pressure-sensitive adhesive is deposited as diagonal cords in order to form cross-pieces.

8. The membrane according to any of claims 1 to 7 ***characterized* in that** the film (1) includes at least one microporous film or a composite of the latter.

9. The membrane according to any of claims 1 to 8 ***characterized* in that** the film (1) includes at least one oriented polymeric film or a composite of the latter.

10. The membrane according to any of claims 1 to 9 ***characterized* in that** the film (1) includes at least one polyolefin film or a composite of the latter.

11. The membrane according to any of claims 1 to 10 ***characterized* in that** the film (1) includes at least one polypropylene film or a composite of the latter.

12. The membrane according to any of claims 1 to 11 ***characterized* in that** the film (1) includes at least one film in non-woven polyolefin or a composite of the latter.

13. The membrane according to any of claims 1 to 12 ***characterized* in that** it includes a protective film (4) capping the second layer of pressure-sensitive adhesive.
